(19) Europäisches Patentamt
European Patent Office
Office européen des brevets

(11) **EP 4 674 986 A1**

(12) **EUROPEAN PATENT APPLICATION**
published in accordance with Art. 153(4) EPC

(43) Date of publication:
**07.01.2026 Bulletin 2026/02**

(21) Application number: **24784604.1**

(22) Date of filing: **14.02.2024**

(51) International Patent Classification (IPC):
***C21B 5/00*** *(2006.01)* ***C21B 7/00*** *(2006.01)*

(52) Cooperative Patent Classification (CPC):
Y02P 10/143

(86) International application number:
**PCT/JP2024/004994**

(87) International publication number:
**WO 2024/209801 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 JP 2023062588**

(71) Applicant: **JFE Steel Corporation**
**Tokyo, 100-0011 (JP)**

(72) Inventors:
- **UCHIDA, Seiji**
  **Tokyo 100-0011 (JP)**
- **HARADA, Hiroki**
  **Tokyo 100-0011 (JP)**
- **SAWAKI, Naomi**
  **Tokyo 100-0011 (JP)**
- **KASHIHARA, Yusuke**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **BLAST FURNACE OPERATION METHOD, AND ANCILLARY EQUIPMENT**

(57) A blast furnace operation method according to the present invention is a blast furnace operation method of blowing oxygen gas and a reducing agent containing methane gas into a blast furnace from a tuyere of the blast furnace includes blowing preheating gas having an amount of carried heat greater than or equal to a predetermined amount of heat set in accordance with a blowing amount of the methane gas into the blast furnace from a gas blowing portion provided above the tuyere of the blast furnace in a case where an oxygen concentration in the oxygen gas is 80 vol% or more.

FIG.1

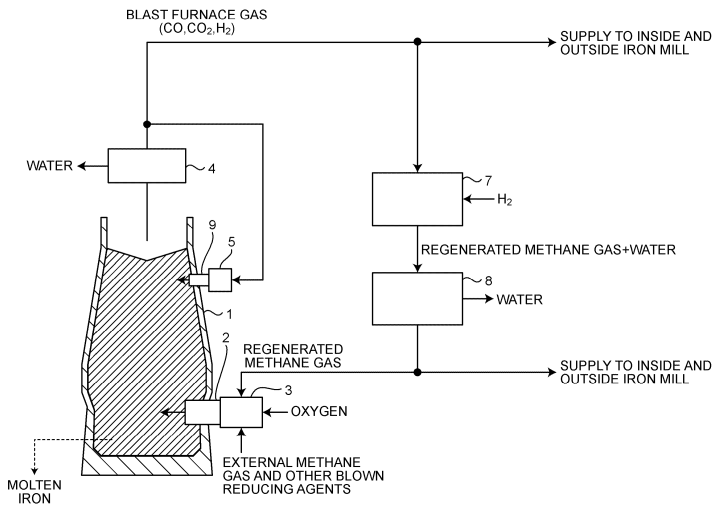




Processed by Luminess, 75001 PARIS (FR)

## Description

### Field

The present invention relates to a blast furnace operation method and auxiliary equipment.

### Background

In recent years, there has been a strong demand for a reduction of carbon dioxide ($CO_2$) emissions amid the global environmental problems. Therefore, in the operation of a blast furnace installed in an iron mill, it is required to perform low reducing agent ratio (low RAR) operation. In a general blast furnace, hot air blast (air heated to about 1200°C) is blown into the blast furnace from a tuyere as blowing gas. As a result, oxygen in the hot air blast reacts with coke or pulverized coal as a reducing agent to generate carbon monoxide (CO) gas or hydrogen ($H_2$) gas. Then, iron ores charged into the blast furnace are reduced by the carbon monoxide gas or the hydrogen gas. In addition, carbon dioxide is generated by the reduction reaction of the iron ores. The blowing gas is gas blown into the blast furnace from the tuyere and plays the role of gasifying coke or pulverized coal in the blast furnace.

As technology for reducing carbon dioxide emissions in the operation of a blast furnace, there is proposed technology in which carbon monoxide or carbon dioxide contained in by-product gas discharged from the blast furnace or the like is reformed to generate hydrocarbons such as methane or ethanol, whereby the hydrocarbons are introduced into the blast furnace again as a reducing agent. For example, Patent Literature 1 describes a blast furnace operation method including a step (A) of separating and recovering $CO_2$ and/or CO from a mixed gas containing $CO_2$ and/or CO, a step (B) of adding hydrogen to the separated and recovered $CO_2$ and/or CO to convert $CO_2$ and/or CO into $CH_4$, a step (C) of separating and removing $H_2O$ from the gas having been subjected to the step (B), and a step (D) of blowing the gas having been subjected to the step (C) into a blast furnace. In addition, Patent Literature 2 describes a blast furnace operation method in which $CO_2$ is separated from an exhaust gas of a combustion furnace using blast furnace gas as a part or all of fuel, and reducing gas obtained by reforming the separated $CO_2$ into methane is blown into a blast furnace. In addition, Patent Literature 3 describes a blast furnace operation method including a step of generating regenerated methane gas from by-product gas discharged from a blast furnace and a step of blowing gas and a reducing agent into the blast furnace from a tuyere of the blast furnace, in which oxygen gas is used as the blowing gas and regenerated methane gas is used as at least a part of the reducing agent.

### Citation List

#### Patent Literature

Patent Literature 1: JP 2011-225969 A
Patent Literature 2: JP 2014-005510 A
Patent Literature 3: WO 2021/106578 A
Patent Literature 4: JP S63-169310 A

#### Non Patent Literature

Non Patent Literature 1: Sato et al., Kawasaki Steel Technical Report, vol. 29 (1997), pp. 30-36

### Summary

#### Technical Problem

In the blast furnace operation method described in Patent Literatures 1 and 2, in a case where the amount of methane gas blown into the blast furnace as a reducing agent is greater than or equal to a predetermined value, operational troubles such as insufficient heat deposition, increased pressure loss, and defective caking in the lower part of the blast furnace may occur. Therefore, in order to perform stable blast furnace operation, it is necessary to limit the blowing amount of methane gas, and thus there is a limit to the effect of reducing carbon dioxide emissions. Meanwhile, in the blast furnace operation method described in Patent Literature 3, oxygen is used as a blowing gas instead of heated air (hot air blast). Hereinafter, a general blast furnace using a hot air blast as the blowing gas is referred to as a hot air blast furnace, and a blast furnace using oxygen as the blowing gas is referred to as an oxygen blast furnace.

In the blast furnace operation method described in Patent Literature 3, it is described that the blowing amount of methane gas can be increased and that the carbon dioxide emissions can be greatly reduced by using an oxygen blast furnace instead of a hot air blast furnace as the blast furnace. However, since nitrogen is not contained in blowing gas in an oxygen blast furnace, the flow rate of blowing gas flowing in the blast furnace is smaller than that in a hot air blast furnace, and thus the amount of heat supplied from the blowing gas to raw materials is also smaller. For this reason, the temperature rise of the raw materials is insufficient, and there is a concern that the molten iron temperature may be insufficient. In general, in order to stably operate a blast furnace, it is considered desirable to set the molten iron temperature to higher than or equal to 1500°C, and when the molten iron temperature is lower than 1500°C, the operation may become unstable or impossible. As technology for solving insufficient heat in an oxygen blast furnace, Patent Literature 4 describes technology for blowing preheating gas from a shaft portion of the oxygen blast furnace. However, the technology described in Patent Literature 4 is intended for an oxygen blast furnace in which pulverized coal is blown and is not applicable to an oxygen blast furnace in which methane gas is blown. Furthermore, Patent Literature 4 does not describe the molten iron temperature, and it is unclear whether or not the blast furnace can be stably operated.

As described above, a blast furnace operation method capable of achieving both a significant reduction in the carbon dioxide emissions by blowing a large amount of methane gas and a high molten iron temperature that enables stable operation has not been established yet.

The present invention has been made to solve the above disadvantages, and an object of the present invention is to provide a blast furnace operation method and blast furnace auxiliary equipment capable of implementing a high molten iron temperature in an oxygen blast furnace in which a large amount of methane gas is blown and achieving both a significant reduction in carbon dioxide emissions from the blast furnace and stable operation.

Solution to Problem

The inventors of the present invention have conducted intensive studies in order to achieve a high molten iron temperature in an oxygen blast furnace in which a large amount of methane gas is blown. As a result, the present inventors have found that a high molten iron temperature can be implemented even in an oxygen blast furnace in which a large amount of methane gas is blown by blowing preheating gas from the shaft portion or the belly portion of a blast furnace and further adjusting the amount of heat carried into the blast furnace by the preheating gas to an appropriate amount of heat corresponding to the blowing amount of methane gas. The present invention has been made on the basis of this finding, and the gist thereof is as follows.

A blast furnace operation method according to the present invention blows oxygen gas and a reducing agent containing methane gas into a blast furnace from a tuyere of the blast furnace, and includes blowing preheating gas having an amount of carried heat greater than or equal to a predetermined amount of heat set in accordance with a blowing amount of the methane gas into the blast furnace from a gas blowing portion provided above the tuyere of the blast furnace in a case where an oxygen concentration in the oxygen gas is 80 vol% or more.

The methane gas may include regenerated methane gas generated using carbon monoxide and/or carbon dioxide in blast furnace gas discharged from the blast furnace and externally-supplied hydrogen.

In a case where a weight ratio of the methane gas in the reducing agent is 80 wt% or more and a blowing amount of the methane gas is within a range of 120 kg/t to 270 kg/t when 1 t of molten iron is manufactured, the amount of heat carried by the preheating gas may be set to a value satisfying the following Inequation (1):

$$Q \geqq 6.89 \times 10^3 \times M^{-0.344} - 7.78 \times 10^2 \quad \cdots (1)$$

,

where Q represents the amount of heat carried by the preheating gas [Mcal/t], and M represents the blowing amount of the methane gas [kg/t] at the time when 1 t of molten iron is manufactured.

In the case where the weight ratio of the methane gas in the reducing agent is 80 wt% or more when 1 t of molten iron is manufactured: the amount of heat carried by the preheating gas may be set to 550 Mcal/t or more in a case where the blowing amount of the methane gas is 120 kg/t or more and less than 170 kg/t; the amount of heat carried by the preheating gas may be set to 400 Mcal/t or more in a case where the blowing amount of the methane gas is 170 kg/t or more and less than 220 kg/t; and the amount of heat carried by the preheating gas may be set to 300 Mcal/t or more in a case where the blowing amount of the methane gas is within a range of 220 kg/t to 270 kg/t.

A temperature of the preheating gas may be set to be within a range of 700°C to 1100°C.

The predetermined amount of heat may be set depending on productivity of the blast furnace obtained by dividing an amount of molten iron produced by the blast furnace per day by a furnace volume of the blast furnace. The amount of molten iron produced per day may be obtained by averaging the amount of molten iron produced within a predetermined period.

In a case where a weight ratio of the methane gas in the reducing agent is 80 wt% or more and productivity of the blast furnace is 4.0 t/d/$m^3$ or more when 1 t of molten iron is manufactured, in a case where a blowing amount of the methane gas may be within a range of 120 kg/t to 270 kg/t, the amount of heat carried by the preheating gas is set to a value satisfying the following Inequation (2):

$$Q \geqq 1.95 \times 10^{13} \times M^{-5.002} + 4.62 \times 10^{2} \quad \cdots (2)$$

,

where Q represents the amount of heat carried by the preheating gas [Mcal/t], and M represents the blowing amount of the methane gas [kg/t] at the time when 1 t of molten iron is manufactured.

In the case where the weight ratio of the methane gas in the reducing agent is 80 wt% or more and productivity of the blast furnace is 4.0 t/d/$m^3$ or more when 1 t of molten iron is manufactured: the amount of heat carried by the preheating gas may be set to 1250 Mcal/t or more in a case where the blowing amount of the methane gas is 120 kg/t or more and less than 170 kg/t; the amount of heat carried by the preheating gas may be set to 600 Mcal/t or more in a case where the blowing amount of the methane gas is 170 kg/t or more and less than 220 kg/t; and the amount of heat carried by the preheating gas may be set to 500 Mcal/t or more in a case where the blowing amount of the methane gas is within a range of 220 kg/t to 270 kg/t.

A temperature of the preheating gas may be set to be within a range of 900°C to 1100°C.

Deeming an installation height of the tuyere as 0 and a height from the installation height of the tuyere to a stockline of the blast furnace as 1, an installation height of the gas blowing portion may be within a range of 0.1 to 0.8.

Gas obtained by recovering blast furnace gas discharged from a furnace top of the blast furnace and combusting a part of the blast furnace gas may be used as the preheating gas.

Blast furnace auxiliary equipment according to the present invention is used in the blast furnace operation method according to the present invention and includes: a methane gas generating device configured to generate regenerated methane gas using blast furnace gas; a gas blowing device including a methane gas supplier configured to introduce the regenerated methane gas into the tuyere of the blast furnace, and an oxygen gas supplier configured to introduce the oxygen gas into the tuyere of the blast furnace; a preheating gas generating device configured to recover the blast furnace gas to generate the preheating gas; and a gas blowing device configured to blow the preheating gas into the blast furnace.

## Advantageous Effects of Invention

According to a blast furnace operation method and auxiliary equipment of the present invention, it is possible to implement a high molten iron temperature in an oxygen blast furnace in which a large amount of methane gas is blown and to achieve both a significant reduction in carbon dioxide emissions and stable operation.

## Brief Description of Drawings

FIG. 1 is a schematic diagram illustrating the configuration of an oxygen blast furnace according to an embodiment of the present invention.

FIG. 2 is a schematic diagram illustrating the configuration of a modification of the oxygen blast furnace illustrated in FIG. 1.

FIG. 3 is a schematic diagram illustrating the structure of a blowing device illustrated in FIGS. 1 and 2.

FIG. 4 is a graph illustrating a relationship between the amount of heat carried by preheating gas and the molten iron temperature in a case where the methane gas blowing amount is within a range of 220 kg/t to 270 kg/t at productivity of 2.5 t/d/$m^3$.

FIG. 5 is a graph illustrating a relationship between the amount of heat carried by preheating gas and the molten iron temperature in a case where the methane gas blowing amount is 170 kg/t or more and less than 220 kg/t at the productivity of 2.5 t/d/$m^3$.

FIG. 6 is a graph illustrating a relationship between the amount of heat carried by preheating gas and the molten iron temperature in a case where the methane gas blowing amount is 120 kg/t or more and less than 170 kg/t at the productivity of 2.5 t/d/$m^3$.

FIG. 7 is a graph illustrating a relationship between the amount of heat carried by preheating gas and the molten iron temperature in a case where the methane gas blowing amount is within a range of 220 kg/t to 270 kg/t at productivity of 5.0 t/d/$m^3$.

FIG. 8 is a graph illustrating a relationship between the amount of heat carried by preheating gas and the molten iron temperature in a case where the methane gas blowing amount is 170 kg/t or more and less than 220 kg/t at the productivity of 5.0 t/d/$m^3$.

FIG. 9 is a graph illustrating a relationship between the amount of heat carried by preheating gas and the molten iron temperature in a case where the methane gas blowing amount is 120 kg/t or more and less than 170 kg/t at the productivity of 5.0 t/d/$m^3$.

FIG. 10 is a graph 10 illustrating a relationship between the methane gas blowing amount and the amount of heat that needs to be carried by preheating gas at the productivity of 2.5 t/d/$m^3$ and 5.0 t/d/$m^3$.

Description of Embodiments

Hereinafter, a blast furnace operation method as an embodiment of the present invention will be described with an exemplary case where the present invention is applied to an oxygen blast furnace illustrated in FIGS. 1 and 2. In FIGS. 1 and 2, symbol 1 denotes an oxygen blast furnace, symbol 2 denotes a tuyere, symbol 3 denotes a blowing device, symbol 4 denotes a first dewatering device, symbol 5 denotes a preheating gas generating device, symbol 6 (see FIG. 2) denotes a gas separating device, symbol 7 denotes a methane gas generating device, symbol 8 denotes a second dewatering device, and symbol 9 denotes a blowing nozzle.

[Blast Furnace Operation Method]

As illustrated in FIG. 1, in the blast furnace operation method as an embodiment of the present invention, first, sintered ores, lump ores, pellets (hereinafter, also referred to as ore raw materials), coke, or the like, which are raw materials, are charged into the oxygen blast furnace 1 from the furnace top of the oxygen blast furnace 1. Next, a reducing agent and blowing gas are blown into the oxygen blast furnace 1 from the blowing device 3 through the tuyere 2 installed at a lower portion of the oxygen blast furnace 1. The reducing agent blown into the oxygen blast furnace 1 is also referred to as a blown reducing agent so as to be distinguished from coke. The blowing gas is blown into the oxygen blast furnace 1 through the tuyere 2 and plays a role of gasifying a blown reducing agent or coke in the oxygen blast furnace 1. The ore raw materials charged into the oxygen blast furnace 1 is reduced by carbon monoxide or hydrogen generated by the blowing gas reacting with the blown reducing agent or coke, whereby molten iron is produced.

Carbon dioxide ($CO_2$) gas is generated in the reduction process of the ore raw materials. This carbon dioxide gas is discharged from the furnace top of the oxygen blast furnace 1 as a by-product gas together with carbon monoxide (CO) gas, hydrogen ($H_2$) gas, and the like that have not reacted with the ore raw materials. The furnace top of the oxygen blast furnace 1 is under a high pressure condition of about 2 to 4 atm. Therefore, water vapor is condensed by expansion cooling when blast furnace gas, which is the by-product gas discharged from the furnace top of the oxygen blast furnace 1, returns to the normal pressure. The condensed water is removed by the first dewatering device 4. Subsequently, at least a part of the blast furnace gas is introduced into the methane gas generating device 7. The methane gas generating device 7 generates methane gas ($CH_4$) through reaction of carbon monoxide and/or carbon dioxide contained in the blast furnace gas with hydrogen. The methane gas generated by the methane gas generating device 7 is referred to as regenerated methane gas.

As illustrated in FIG. 2, before introducing the blast furnace gas into the methane gas generating device 7, the blast furnace gas may be introduced into the gas separating device 6, and only carbon dioxide separated from the blast furnace gas may be introduced into the methane gas generating device 7. According to such a configuration, the volume of the gas introduced into the methane gas generating device 7 can be reduced, and the methane gas generating device 7 can be downsized. In this case, the remaining gas obtained after separating carbon dioxide from the blast furnace gas (hereinafter, also referred to as a post-separation remainder gas) may be joined to a supply line of blast furnace gas in the iron mill. The post-separation remainder gas mainly contains carbon monoxide and hydrogen and may partially contain nitrogen, argon, or others.

Hydrogen used for production of regenerated methane gas may be supplied externally; however, a production method that generates carbon dioxide as little as possible is preferable, and examples thereof include electrolysis of water. In addition, examples of the hydrogen supplied externally include hydrogen produced by reforming a hydrocarbon such as natural gas by steam reforming or the like, hydrogen obtained by vaporizing liquefied hydrogen, hydrogen produced by dehydrogenating an organic hydride, and others. Hydrogen may not be a gas having a hydrogen concentration of 100 vol%; however, it is preferable to use a gas having a high hydrogen concentration, specifically, a gas having a hydrogen concentration 80 vol% or more in order to increase the methane concentration in the regenerated methane gas. The hydrogen concentration is more preferably 90 vol% or more, still more preferably 95 vol% or more. The hydrogen concentration may be 100 vol%. Examples of the remainder gas other than hydrogen include CO, $CO_2$, $H_2S$, $CH_4$, and $N_2$.

Next, the regenerated methane gas is cooled to an ordinary temperature to condense water vapor in the regenerated methane gas. The condensed water is removed by the second dewatering device 8. In this manner, regenerated methane gas is generated using carbon dioxide, carbon monoxide and/or hydrogen in the blast furnace gas and hydrogen supplied externally. The gas separating device 6, the methane gas generating device 7, and the second dewatering device 8 are not necessarily disposed adjacent to the oxygen blast furnace 1. For example, it is also possible to use regenerated methane gas generated by supplying blast furnace gas to the outside, separating carbon dioxide from the blast furnace gas by an external gas separating device 6, and allowing carbon dioxide to react with hydrogen supplied from the outside in an external methane gas generating device 7.

Next, the regenerated methane gas is introduced into the blowing device 3. The blowing device 3 includes a reducing agent supplier that introduces a blown reducing agent into the tuyere 2 and an oxygen gas supplier that introduces an oxygen gas to be a blowing gas into the tuyere 2. As illustrated in FIG. 3(a), for example, the blowing device 3 includes a coaxial multiple pipe having a central pipe 31 and an outer pipe 32. Methane gas G1 containing regenerated methane gas is introduced into the central pipe 31 serving as a methane gas supplier (passage), and the blowing gas G2 is introduced into an annular pipe passage between the central pipe 31 and the outer pipe 32 serving as a blowing gas supplier (passage). The methane gas blown into the oxygen blast furnace 1 (hereinafter, referred to as blown methane gas) may include not only the regenerated methane gas but also methane gas (also referred to as external methane gas) supplied from another line depending on the operation of the iron mill. In this case, an external methane gas supply line may be connected to the methane gas supplier of the blowing device 3, or an external methane gas supply line may be connected to a supplier of other blown reducing agents described later.

In addition, an external methane gas supply line may be connected to the regenerated methane gas flow path between the methane gas generating device 7 and the blowing device 3 (preferably, between the second dewatering device 8 and the blowing device 3). Examples of the external methane gas include methane gas derived from fossil fuels. The ratio of the external methane gas in the blown methane gas is preferably 20 vol% or less, more preferably 10 vol% or less, and still more preferably 5 vol% or less. The total amount of methane gas may be regenerated methane gas, and external methane gas may not be contained. This is because, as the external methane gas increases, the amount of $CO_2$ gas to be reused as methane gas in the $CO_2$ gas discharged from the furnace top decreases, and the $CO_2$ gas discharged to the outside increases. By reducing the ratio of the external methane gas in the methane gas and increasing the ratio of the regenerated methane gas, a high $CO_2$ reduction effect can be achieved.

In addition, other blown reducing agents such as pulverized coal, waste plastic and a reducing gas such as hydrogen or carbon monoxide may be used together with methane gas. The blowing amount of other blown reducing agents into the oxygen blast furnace 1 is preferably less than 20 wt% with respect to the total amount of the blown reducing agent containing methane gas. In other words, the weight ratio of methane gas in the blown reducing agent is preferably 80 wt% or more. In a case where another blown reducing agent is used, the other blown reducing agent may also be introduced into the methane gas supplier together with the blown reducing agent. When pulverized coal or waste plastic is used as the other blown reducing agent, it is preferable to provide another reducing agent supplier (passage) for circulating pulverized coal or waste plastic separately from the methane gas supplier.

In this case, as illustrated in FIG. 3(b), the blowing device 3 includes a coaxial multiple pipe in which an inner pipe 33 is provided in a central pipe 31 in addition to the central pipe 31 and an outer pipe 32. Furthermore, another blown reducing agent G3 such as pulverized coal or waste plastic is introduced from an inner pipe passage serving as another reducing agent supplier. In addition, methane gas G1 is introduced from an annular pipe passage between the inner pipe 33 and the central pipe 31 serving as a methane gas supplier, and blowing gas G2 is introduced from an annular pipe passage between the central pipe 31 and the outer pipe 32 serving as an oxygen gas supplier Using oxygen at an ordinary temperature as the blowing gas deteriorates ignitability, and thus it is preferable that the discharging portion of the outer pipe 32 have a porous structure to promote mixing of oxygen and the blown reducing agent. Next, as illustrated in FIGS. 3(a) and 3(b), the blown reducing agent such as methane gas introduced from the blowing device 3 and the blowing gas are mixed in the tuyere 2, and the mixed gas is rapidly ignited and rapidly combusted immediately after being blown into the oxygen blast furnace 1 from the tuyere 2. Then, a raceway, which is a region where a blown reducing agent such as blown methane gas or coke and oxygen gas react with each other, is formed in the blast furnace ahead of the tuyere 2.

[Oxygen Concentration]

In the blast furnace operation method according to an embodiment of the present invention, oxygen gas is used as the blowing gas instead of hot air blast. When hot air blast (air heated to about 1200°C) is used as the blowing gas, the combustion gas contains about 50 vol% of nitrogen that does not contribute to the combustion reaction, and thus the temperature of flames in the raceway is unlikely to be high. For this reason, blowing a large amount of methane gas into the blast furnace reduces the tuyere tip temperature, which causes an operational issue. Meanwhile, in a case where oxygen gas is used as the blowing gas, since it is possible to suppress mixing of the nitrogen gas that does not contribute to the combustion reaction, it is possible to raise the tuyere tip temperature to a sufficient temperature. That is, the flame temperature in the raceway can be made higher than that in a case of using a hot air blast.

The oxygen concentration in the oxygen gas is set to be 80 vol% or more. In a case where the oxygen concentration in the oxygen gas is low, a sufficient tuyere tip temperature cannot be ensured when a large amount of methane gas is blown, which may cause an operational issue. Therefore, the oxygen concentration in the oxygen gas is set to be 80 vol% or more, more preferably 90 vol% or more, and still more preferably 95 vol% or more. The oxygen concentration may be 100 vol%. As the remainder gas other than oxygen in the oxygen gas, nitrogen, carbon dioxide, argon, or others may be contained.

[Methane Gas]

The methane concentration in the blown methane gas including regenerated methane gas or regenerated methane gas and external methane gas is preferably 80 vol% or more. In a case where the methane concentration in the blown methane gas is low, the amount of gas blown into the blast furnace increases, and thus the pressure loss in the blast furnace may increase to reduce the productivity. In addition, in the case where the methane concentration in the blown methane gas is low, the reduction efficiency of the iron ores in the blast furnace is deteriorated, which may cause an operational issue. Therefore, the methane concentration in the blown methane gas is preferably 80 vol% or more. The methane concentration in the blown methane gas is more preferably 90 vol% or more, and still more preferably 95 vol% or more. The methane concentration in the blown methane gas may be 100 vol%.

For the same reason, the methane concentration in each of the regenerated methane gas and the external methane gas is preferably 80 vol% or more. The methane concentration in each of the regenerated methane gas and the external methane gas is more preferably 90 vol% or more, and still more preferably 95 vol% or more. The methane concentration in each of the regenerated methane gas and the external methane gas may be 100 vol%. Carbon monoxide, carbon dioxide, hydrogen, hydrocarbons, and impurity gases such as nitrogen may be contained as the remainder gas other than methane in the blown methane gas, the regenerated methane gas, and the external methane gas. In a case where the methane concentration of the regenerated methane gas decreases, the methane concentration in the blown methane gas can be kept high by decreasing the ratio of the regenerated methane gas in the blown methane gas and increasing the ratio of the external methane gas having a high methane concentration.

In the blast furnace operation method, which is an embodiment of the present invention, the methane gas blowing amount is set to a range of 120 kg/t to 270 kg/t. The unit "kg/t" means a weight (kg) required for producing 1 t of molten iron. The amount of reducing gas in the blast furnace is proportional to the amount of coke (kg/t) and the amount of blown reducing agent (kg/t). In a case where the methane gas blowing amount is less than 120 kg/t, the amount of the reducing gas generated from the methane gas is extremely reduced. For this reason, even if preheating gas blowing conditions described later are adjusted, a high molten iron temperature cannot be obtained, which makes stable operation difficult. Although it is possible to increase the reducing gas by increasing the amount of coke, it goes against the goal of reduction of $CO_2$ emissions. On the other hand, in a case where the methane gas blowing amount is excessively increased, the gas temperature at the tuyere tip is extremely lowered although the amount of the reducing gas is sufficient. For this reason, even if preheating gas blowing conditions described later are adjusted, a high molten iron temperature cannot be obtained, which makes stable operation difficult.

Furthermore, in a case where the productivity is 4.0 t/d/$m^3$ or more, the methane gas blowing amount is desirably within a range of 170 kg/t to 270 kg/t. In the case where the productivity is 4.0 t/d/$m^3$ or more, the residence time in the furnace is shortened, and the time available for reduction is shortened. For this reason, in order to obtain a high molten iron temperature, it is necessary to increase the amount of reducing gas by increasing the methane gas blowing amount to promote reduction.

[Preheating Gas]

In the blast furnace operation method according to an embodiment of the present invention, a preheating gas is blown into the oxygen blast furnace from a gas blower provided at the shaft portion or the belly portion. Then, the amount of heat carried into the oxygen blast furnace by the preheating gas is adjusted to an appropriate value depending on the blowing amount of methane gas. Since nitrogen is not contained in the blowing gas in the oxygen blast furnace, the flow rate of gas flowing in the blast furnace is smaller than that in a hot air blast furnace, and thus the amount of heat supplied from the gas to raw materials is also smaller. Therefore, the temperature of the raw materials is not sufficiently raised, and the molten iron temperature is lowered. Therefore, in the present embodiment, as illustrated in FIGS. 1 and 2, in order to compensate for an insufficient amount of heat, a preheating gas is blown from the blowing nozzle 9 provided at the shaft portion or the belly portion, and the amount of heat carried by the preheating gas is set to greater than or equal to a predetermined value, thereby improving the molten iron temperature. The predetermined value may be set depending on the productivity of the blast furnace obtained by dividing the amount of molten iron produced by the blast furnace within a predetermined period (for example, one day) by the volume of the blast furnace.

In the present embodiment, methane gas is blown from the tuyere 2, and the amount of gas in the furnace changes depending on the methane gas blowing amount. In a case where the methane gas blowing amount is small, the amount of gas in the furnace is small, and thus the amount of heat supplied from the gas to the raw materials is reduced. Therefore, in order to obtain a high molten iron temperature, it is necessary to increase the preheating gas blowing amount. On the other hand, in a case where the methane gas blowing amount is large, the amount of gas in the furnace increases, and thus the amount of heat supplied from the gas to the raw materials increases. Therefore, the amount of heat carried by the preheating gas can be reduced as compared with the case where the methane gas blowing amount is small. Therefore, it is important to adjust the amount of heat carried by the preheating gas depending on the methane gas blowing amount.

The amount of heat carried by the preheating gas is preferably set so as to satisfy the condition represented by the following formula (1) according to the methane gas blowing amount.

$$Q \geqq 6.89 \times 10^3 \times M^{-0.344} - 7.78 \times 10^2 \quad \cdots (1)$$

Wherein Q represents the amount of heat carried by preheating gas [Mcal/t] at the time of producing 1t of molten iron, and M represents the methane gas blowing amount [kg/t] at the time of producing 1t of molten iron.

Preferably, (1) the amount of heat carried by the preheating gas is 300 Mcal/t or more in a case where the methane gas blowing amount is within a range of 220 kg/t to 270 kg/t, (2) the amount of heat carried by the preheating gas is 400 Mcal/t or more in a case where the methane gas blowing amount is 170 kg/t or more and less than 220 kg/t, and (3) the amount of heat carried by the preheating gas is 550 Mcal/t or more in a case where the methane gas blowing amount is 120 kg/t or more and less than 170 kg/t.

In addition, in a case where the productivity is 4.0 t/d/m$^3$ or more, the amount of heat carried by the preheating gas is preferably set to satisfy the condition expressed in the following Inequation (2) depending on the methane gas blowing amount.

$$Q \geqq 1.95 \times 10^{13} \times M^{-5.002} + 4.62 \times 10^2 \quad \cdots (2)$$

Wherein Q represents the amount of heat carried by preheating gas [Mcal/t] at the time of producing 1t of molten iron, and M represents the methane gas blowing amount [kg/t] at the time of producing 1t of molten iron.

Preferably, (4) the amount of heat carried by the preheating gas is 500 Mcal/t or more in the case where the methane gas blowing amount is within the range of 220 kg/t to 270 kg/t, (5) the amount of heat carried by the preheating gas is 600 Mcal/t or more in the case where the methane gas blowing amount is 170 kg/t or more and less than 220 kg/t, and (6) the amount of heat carried by the preheating gas is 1250 Mcal/t or more in the case where the methane gas blowing amount is 120 kg/t or more and less than 170 kg/t.

The above relational expression was derived by calculation using a simulation model of the blast furnace. As the configuration of the simulation model of the blast furnace, a simulation model similar to that described in Non-Patent Literature 1 was used. It has been confirmed that the simulation model can accurately reproduce the actual operation situation of the blast furnace, and it is conceivable that a result similar to the result obtained by the simulation model can be obtained even in a case where the blast furnace is actually operated. Using this simulation model, in a blast furnace of 150 m$^3$, oxygen gas having an oxygen concentration of 100% and a temperature of 25°C and methane gas having a methane concentration of 100% were blown from a tuyere, a preheating gas was blown from a shaft portion, and an operation simulation was performed under the conditions of productivity of 2.5 t/d/m$^3$ and a coke ratio of 460 kg/t. Then, by changing the methane gas blowing amount and the amount of heat carried, the conditions under which the molten iron temperature were higher than or equal to 1500°C were studied. As a result, it has become clear that the molten iron temperature is improved by setting the amount of heat carried by the preheating gas to greater than or equal to the predetermined value and that the amount of heat carried by the preheating gas required for setting the molten iron temperature to 1500°C or higher varies depending on the methane gas blowing amount.

FIGS. 4 to 6 illustrate the relationship between the amount of heat carried by the preheating gas and the molten iron temperature in cases where the methane gas blowing amount is within the range of 220 kg/t to 270 kg/t, 170 kg/t or more and less than 220 kg/t, and 120 kg/t or more and less than 170 kg/t. From these graphs, it has been found that the amount of heat carried by the preheating gas required for setting the molten iron temperature to 1500°C or higher is 300 Mcal/t or more in the case where the methane gas blowing amount is within the range of 220 kg/t to 270 kg/t, 400 Mcal/t or morein the case where the methane gas blowing amount is 170 kg/t or more and less than 220 kg/t, and 550 Mcal/t or more in the case where the methane gas blowing amount is 120 kg/t or more and less than 170 kg/t.

In addition, FIGS. 7 to 9 illustrate the results of performing a similar evaluation by changing the productivity to 5.0 t/d/m$^3$. It has been found that, in the case where the productivity is 5.0 t/d/m$^3$, the amount of heat carried by the preheating gas required for setting the molten iron temperature to 1500°C or higher is 500 Mcal/t or more in the case where the methane gas blowing amount is within the range of 220 kg/t to 270 kg/t, 600 Mcal/t or more in the case where the methane gas blowing amount is 170 kg/t or more and less than 220 kg/t, and 1250 Mcal/t or more in the case where the methane gas blowing amount is 120 kg/t or more and less than 170 kg/t.

Plotting the relationship between the methane gas blowing amount and the amount of heat that needs to be carried by the preheating gas is plotted in a case where the representative value of the methane gas blowing amount in a case where the methane gas blowing amount is 220 kg/t or more and less than 270 kg/t is set to 220 kg/t, the representative value of the methane gas blowing amount in a case where the methane gas blowing amount is 170 kg/t or more and less than 220 kg/t is set to 170 kg/t, and the representative value of the methane gas blowing amount in a case where the methane gas blowing amount is 120 kg/t or more and less than 170 kg/t is set to 120 kg/t, the relationship as illustrated in FIG. 10 is obtained. Drawing an approximate curve for these plots gives the approximate curve expressed in the following Equation (3) for the case where the productivity is 2.5 t/d/m$^3$.

$$Q = 6.89 \times 10^3 \times M^{-0.344} - 7.78 \times 10^2 \quad \cdots (3)$$

Therefore, if the amount of heat carried by the preheating gas satisfies the following Inequation (1), the molten iron temperature can be set to higher than or equal to 1500°C.

$$Q \geqq 6.89 \times 10^3 \times M^{-0.344} - 7.78 \times 10^2 \quad \cdots (1)$$

Wherein Q represents the amount of heat carried by preheating gas [Mcal/t] at the time of producing 1t of molten iron, and M represents the methane gas blowing amount [kg/t] at the time of producing 1t of molten iron.

In addition, in a case where the productivity is 4.0 t/d/m$^3$, the approximate curve expressed by the following Equation (4) is obtained.

$$Q = 1.95 \times 10^{13} \times M^{-5.002} + 4.62 \times 10^2 \quad \cdots (4)$$

Therefore, if the amount of heat carried by the preheating gas satisfies the following Inequation (2), the molten iron temperature can be set to higher than or equal to 1500°C.

$$Q \geqq 1.95 \times 10^{13} \times M^{-5.002} + 4.62 \times 10^2 \quad \cdots (2)$$

Wherein Q represents the amount of heat carried by preheating gas [Mcal/t], and M represents the methane gas blowing amount [kg/t] at the time of producing 1t of molten iron.

In order to adjust the amount of heat carried by the preheating gas, it is sufficient to adjust the temperature or the blowing amount of the preheating gas. The temperature of the preheating gas to be blown is preferably within a range of 700°C to 1100°C. In a case where the temperature of the preheating gas to be blown is lower than 700°C, it is not preferable since it is necessary to extremely increase the flow rate in order to obtain a necessary amount of carried heat and the ventilation in the furnace is deteriorated. On the other hand, in a case where the temperature of the preheating gas to be blown is higher than 1100°C, the heat load on the furnace body is increased around the blowing nozzle, which disadvantageously shortens the life of the furnace body. Furthermore, in a case where the productivity is higher than or equal to 4.0 t/d/m$^3$, the temperature of the preheating gas to be blown is preferably within a range of 900°C to 1100°C.

As a method of generating the preheating gas, a method of generating a high-temperature gas by combusting fuel with oxygen and then mixing the high-temperature gas with a dilution gas to adjust the mixed gas to have a predetermined temperature and flow rate, a method of directly heating the gas with an electric heater, or other methods can be used. In a case where the preheating gas is generated by combustion, the blast furnace gas, coke oven gas, natural gas, propane gas, or the like can be used as the fuel. As the dilution gas, the blast furnace gas, coke oven gas, nitrogen, or the like can be used. From the viewpoint of effective use of energy, as illustrated in FIGS. 1(a) and 1(b), the predetermined temperature and flow rate may be adjusted by recovering the blast furnace gas discharged from the furnace top of the oxygen blast furnace 1, combusting a part of the blast furnace gas to generate a high temperature gas, and further mixing the high temperature gas with the blast furnace gas before combustion.

Deeming the installation height of the tuyere 2 of the oxygen blast furnace 1 as 0 and the height from the installation height of the tuyere 2 to a stockline as 1, the installation height of the blowing nozzle 9 is within a range of 0.1 to 0.8, and preferably within a range of 0.2 to 0.7. The stock line is an index representing the deposition height of raw materials in the blast furnace and is a position set in advance in each blast furnace in accordance with a planned value of the iron tapping amount. In a case where the installation height of the blowing nozzle 9 is greater than 0.8, the distance for heat exchange between the preheating gas and raw materials in the furnace is short, and the temperature rise effect by the preheating gas cannot be sufficiently obtained. On the other hand, in a case where the installation height of the blowing nozzle 9 is less than 0.1, the temperature of the gas in the furnace at the height at which the preheating gas is blown is higher than the temperature of the preheating gas, and thus, conversely, the temperature is lowered by the blowing preheating gas, and the molten iron temperature cannot be achieved.

[Examples]

Examples and comparative examples of the present invention are illustrated in Table 1. These examples are an example of performing numerical simulations presuming a case where operation is performed in an oxygen blast furnace having a furnace volume of 150 $m^3$. In the examples, as preheating gas, such gas as having a predetermined temperature and a predetermined flow rate was generated and blown by recovering and dehydrating blast furnace gas discharged from the furnace top of the oxygen blast furnace, partially combusting the blast furnace gas with oxygen, and then mixing the gas with the blast furnace gas before the combustion. Deeming the tuyere installation position of the oxygen blast furnace as 0 and the height from the tuyere installation position to the stockline as 1, a blowing nozzle was installed at a position having a height of 0.5. In Examples 1 to 7, the molten iron temperature was 1500°C or higher, whereas in Comparative Examples 1 to 6, it was confirmed that the molten iron temperature was lower than 1500°C. As a result, according to the present invention, it has been confirmed that it is possible to implement a high molten iron temperature in an oxygen blast furnace in which a large amount of methane gas is blown and to achieve both a significant reduction in carbon dioxide emissions from the blast furnace and stable operation.

Table 1

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|
| Productivity | t/d/m3 | 2.5 | 2.5 | 2.5 | 5.0 | 5.0 | 5.0 | 2.5 | 2.5 | 2.5 | 2.5 | 5.0 | 5.0 | 5.0 |
| Coke Ratio | kg/t | 460 | 460 | 460 | 460 | 460 | 460 | 460 | 460 | 460 | 460 | 460 | 460 | 460 |
| Concentration of Blown Oxygen | % | 100 | 100 | 100 | 100 | 100 | 100 | 80 | 100 | 100 | 100 | 100 | 100 | 100 |
| Temperature of Blown Oxygen | °C | 25 | 25 | 25 | 25 | 25 | 25 | 25 | 25 | 25 | 25 | 25 | 25 | 25 |
| Amount of Blown Air | Nm3/t | 0 | 0 | 0 | 0 | 0 | 0 | 144 | 0 | 0 | 0 | 0 | 0 | 0 |
| Amount of Blown Oxygen | Nm3/t | 480 | 450 | 413 | 478 | 449 | 402 | 424 | 472 | 442 | 408 | 479 | 448 | 403 |
| Methane Gas Blowing Amount | kg/t | 235 | 202 | 162 | 235 | 199 | 162 | 203 | 235 | 202 | 160 | 234 | 199 | 150 |
| Ratio of Regenerated Methane Gas in Methane GAS | % | 100 | 100 | 100 | 100 | 100 | 100 | 100 | 100 | 100 | 100 | 100 | 100 | 100 |
| Temperature of Preheating Gas | °C | 1000 | 800 | 1000 | 1000 | 1000 | 1000 | 800 | - | 1000 | 800 | 1000 | 1000 | 1000 |
| Flow Rate of Preheating Gas | Nm3/t | 230 | 461 | 463 | 345 | 402 | 862 | 578 | 0 | 227 | 377 | 320 | 346 | 640 |
| Amount of Heat Carried by Preheating Gas | Mcal/t | 354 | 564 | 715 | 531 | 619 | 1330 | 708 | 0 | 277 | 470 | 493 | 533 | 988 |
| Molten Iron Temperature | °C | 1506 | 1510 | 1510 | 1501 | 1501 | 1501 | 1500 | 1473 | 1494 | 1493 | 1499 | 1498 | 1494 |

Although the embodiments applied with the invention devised by the present inventors have been described above, the present invention is not limited by the description and a drawing included as a part of the disclosure of the present invention according to the embodiments. That is, other embodiments, examples, operation technology, and the like implemented by those skilled in the art on the basis of the present embodiments are all included in the scope of the invention.

Industrial Applicability

According to the present invention, it is possible to provide a blast furnace operation method and blast furnace auxiliary equipment capable of implementing a high molten iron temperature in an oxygen blast furnace in which a large amount of methane gas is blown and achieving both a significant reduction in carbon dioxide emissions from the blast furnace and stable operation.

Reference Signs List

1 OXYGEN BLAST FURNACE

2 TUYERE

3 BLOWING DEVICE

4 FIRST DEWATERING DEVICE

5 PREHEATING GAS GENERATING DEVICE

6 GAS SEPARATING DEVICE

7 METHANE GAS GENERATING DEVICE

8 SECOND DEWATERING DEVICE

9 BLOWING NOZZLE

**Claims**

**1.** A blast furnace operation method of blowing oxygen gas and a reducing agent containing methane gas into a blast furnace from a tuyere of the blast furnace, the method comprising
blowing preheating gas having an amount of carried heat greater than or equal to a predetermined amount of heat set in accordance with a blowing amount of the methane gas into the blast furnace from a gas blowing portion provided above the tuyere of the blast furnace in a case where an oxygen concentration in the oxygen gas is 80 vol% or more.

**2.** The blast furnace operation method according to claim 1, wherein the methane gas includes regenerated methane gas generated using carbon monoxide and/or carbon dioxide in blast furnace gas discharged from the blast furnace and externally-supplied hydrogen.

**3.** The blast furnace operation method according to claim 2, wherein, in a case where a weight ratio of the methane gas in the reducing agent is 80 wt% or more and a blowing amount of the methane gas is within a range of 120 kg/t to 270 kg/t when 1 t of molten iron is manufactured, the amount of heat carried by the preheating gas is set to a value satisfying the following Inequation (1):

$$Q \geqq 6.89 \times 10^3 \times M^{-0.344} - 7.78 \times 10^2 \quad \cdots (1)$$

,

where Q represents the amount of heat carried by the preheating gas [Mcal/t], and M represents the blowing amount of the methane gas [kg/t] at the time when 1 t of molten iron is manufactured.

4. The blast furnace operation method according to claim 3, wherein, in the case where the weight ratio of the methane gas in the reducing agent is 80 wt% or more when 1 t of molten iron is manufactured:

the amount of heat carried by the preheating gas is set to 550 Mcal/t or more in a case where the blowing amount of the methane gas is 120 kg/t or more and less than 170 kg/t;
the amount of heat carried by the preheating gas is set to 400 Mcal/t or more in a case where the blowing amount of the methane gas is 170 kg/t or more and less than 220 kg/t; and
the amount of heat carried by the preheating gas is set to 300 Mcal/t or more in a case where the blowing amount of the methane gas is within a range of 220 kg/t to 270 kg/t.

5. The blast furnace operation method according to claim 3, wherein a temperature of the preheating gas is set to be within a range of 700°C to 1100°C.

6. The blast furnace operation method according to claim 4, wherein a temperature of the preheating gas is set to be within a range of 700°C to 1100°C.

7. The blast furnace operation method according to claim 2, wherein the predetermined amount of heat is set depending on productivity of the blast furnace obtained by dividing an amount of molten iron produced by the blast furnace per day by a furnace volume of the blast furnace.

8. The blast furnace operation method, wherein, in a case where a weight ratio of the methane gas in the reducing agent is 80 wt% or more and productivity of the blast furnace is 4.0 t/d/$m^3$ or more when 1 t of molten iron is manufactured,

in a case where a blowing amount of the methane gas is within a range of 120 kg/t to 270 kg/t, the amount of heat carried by the preheating gas is set to a value satisfying the following Inequation (2):

$$Q \geqq 1.95 \times 10^{13} \times M^{-5.002} + 4.62 \times 10^{2} \quad \cdots (2)$$

,

where Q represents the amount of heat carried by the preheating gas [Mcal/t], and M represents the blowing amount of the methane gas [kg/t] at the time when 1 t of molten iron is manufactured.

9. The blast furnace operation method according to claim 7, wherein, in the case where the weight ratio of the methane gas in the reducing agent is 80 wt% or more and productivity of the blast furnace is 4.0 t/d/$m^3$ or more when 1 t of molten iron is manufactured:

the amount of heat carried by the preheating gas is set to 1250 Mcal/t or more in a case where the blowing amount of the methane gas is 120 kg/t or more and less than 170 kg/t;
the amount of heat carried by the preheating gas is set to 600 Mcal/t or more in a case where the blowing amount of the methane gas is 170 kg/t or more and less than 220 kg/t; and
the amount of heat carried by the preheating gas is set to 500 Mcal/t or more in a case where the blowing amount of the methane gas is within a range of 220 kg/t to 270 kg/t.

10. The blast furnace operation method according to claim 8, wherein a temperature of the preheating gas is set to be within a range of 900°C to 1100°C.

11. The blast furnace operation method according to claim 9, wherein a temperature of the preheating gas is set to be within a range of 900°C to 1100°C.

12. The blast furnace operation method according to claim 1, wherein, deeming an installation height of the tuyere as 0 and a height from the installation height of the tuyere to a stockline of the blast furnace as 1, an installation height of the gas blowing portion is within a range of 0.1 to 0.8.

13. The blast furnace operation method according to claim 1, wherein gas obtained by recovering blast furnace gas discharged from a furnace top of the blast furnace and combusting a part of the blast furnace gas is used as the preheating gas.

**14.** Blast furnace auxiliary equipment used in the blast furnace operation method according to any one of claims 2 to 13, the blast furnace auxiliary equipment comprising:

a methane gas generating device configured to generate regenerated methane gas using blast furnace gas;
a gas blowing device including

a methane gas supplier configured to introduce the regenerated methane gas into the tuyere of the blast furnace, and
an oxygen gas supplier configured to introduce the oxygen gas into the tuyere of the blast furnace;

a preheating gas generating device configured to recover the blast furnace gas to generate the preheating gas; and
a gas blowing device configured to blow the preheating gas into the blast furnace.

FIG.1

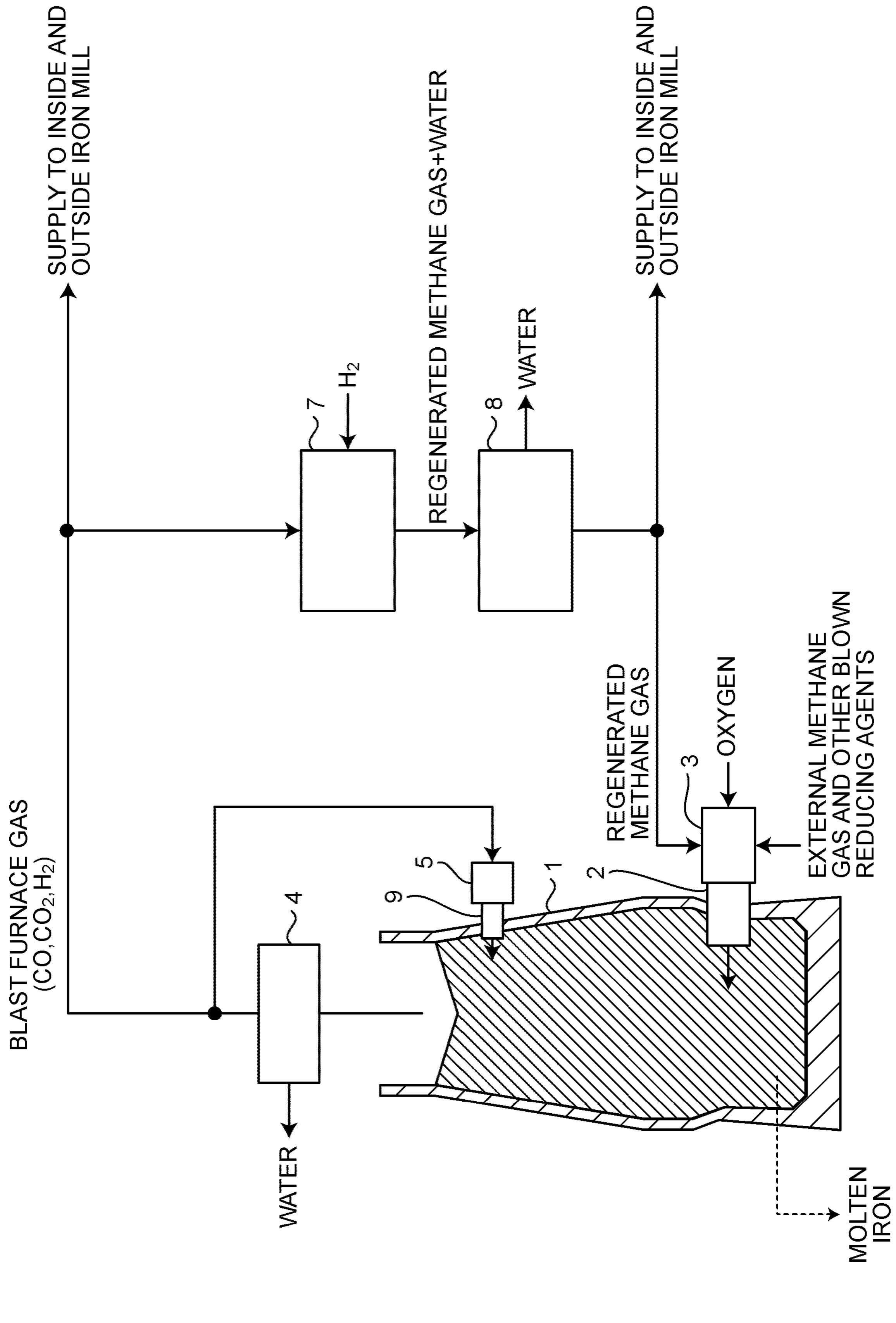
SUPPLY TO INSIDE AND
OUTSIDE IRON MILL
REGENERATED METHANE GAS+WATER
$H_2$
7
8
WATER
SUPPLY TO INSIDE AND
OUTSIDE IRON MILL
BLAST FURNACE GAS
($CO$,$CO_2$,$H_2$)
4
5
9
1
2
3
REGENERATED
METHANE GAS
OXYGEN
EXTERNAL METHANE
GAS AND OTHER BLOWN
REDUCING AGENTS
WATER
MOLTEN
IRON

FIG.2

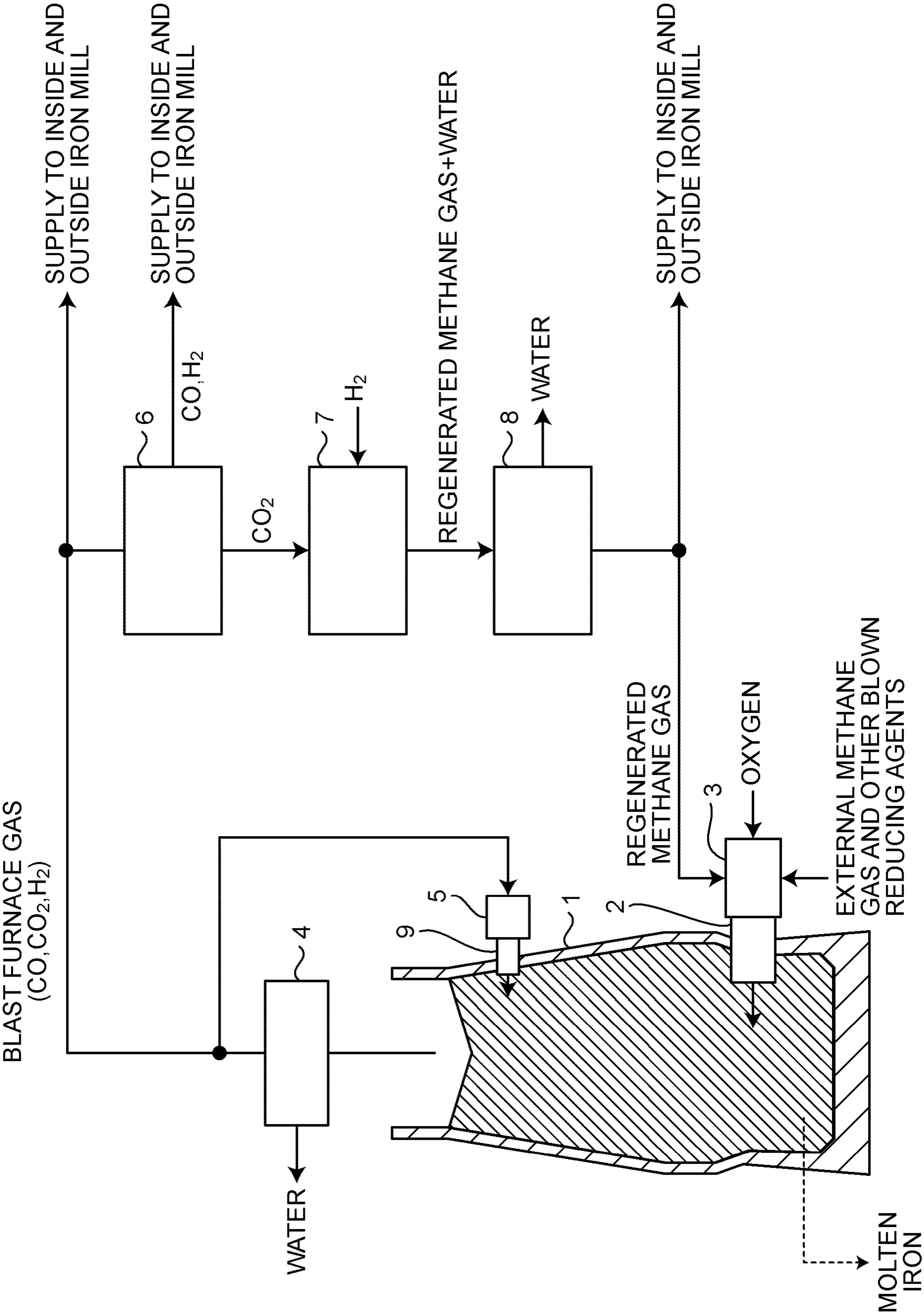
BLAST FURNACE GAS
($CO$,$CO_2$,$H_2$)
SUPPLY TO INSIDE AND
OUTSIDE IRON MILL
SUPPLY TO INSIDE AND
OUTSIDE IRON MILL
REGENERATED METHANE GAS+WATER
SUPPLY TO INSIDE AND
OUTSIDE IRON MILL
6
$CO$,$H_2$
$CO_2$
7
$H_2$
8
WATER
4
WATER
5
9
1
2
3
REGENERATED
METHANE GAS
OXYGEN
EXTERNAL METHANE
GAS AND OTHER BLOWN
REDUCING AGENTS
MOLTEN
IRON

FIG.3

(a)

(b)

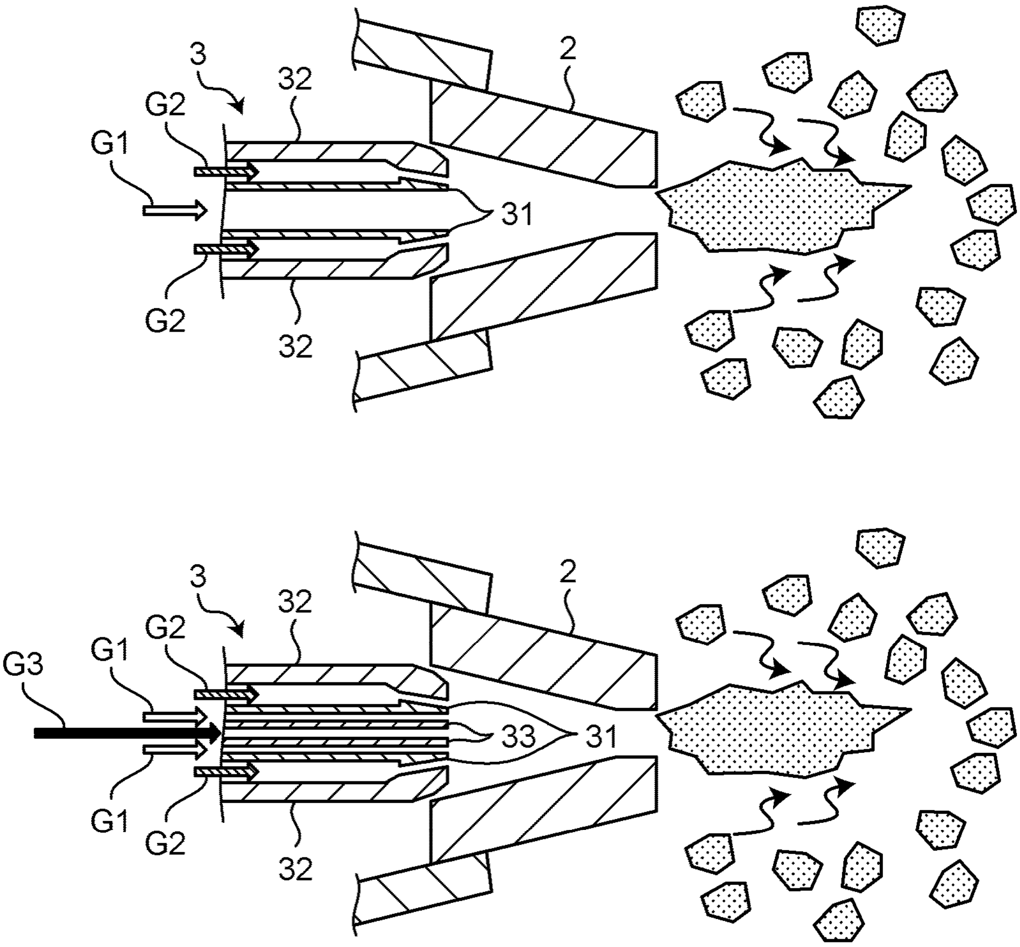

FIG.4

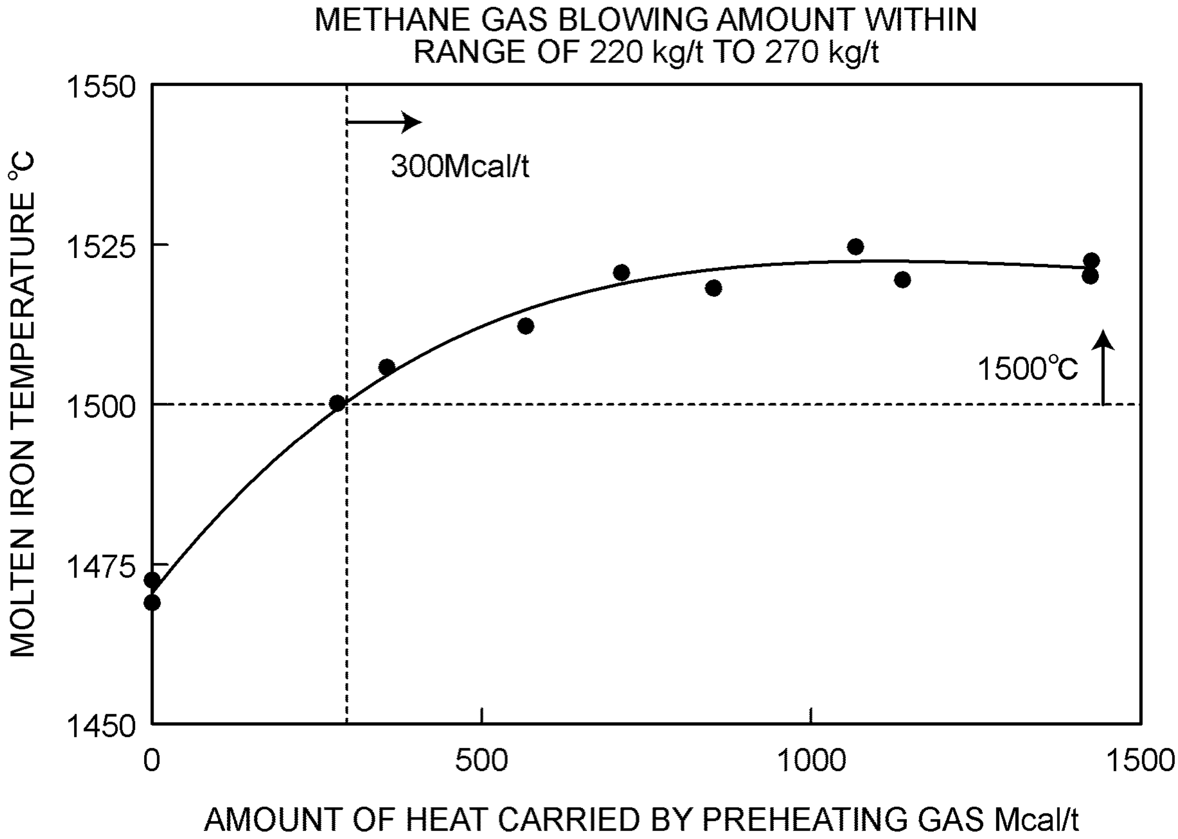
METHANE GAS BLOWING AMOUNT WITHIN
RANGE OF 220 kg/t TO 270 kg/t
MOLTEN IRON TEMPERATURE °C
1550
1525
1500
1475
1450
0
500
1000
1500
300Mcal/t
1500℃
AMOUNT OF HEAT CARRIED BY PREHEATING GAS Mcal/t

FIG.5

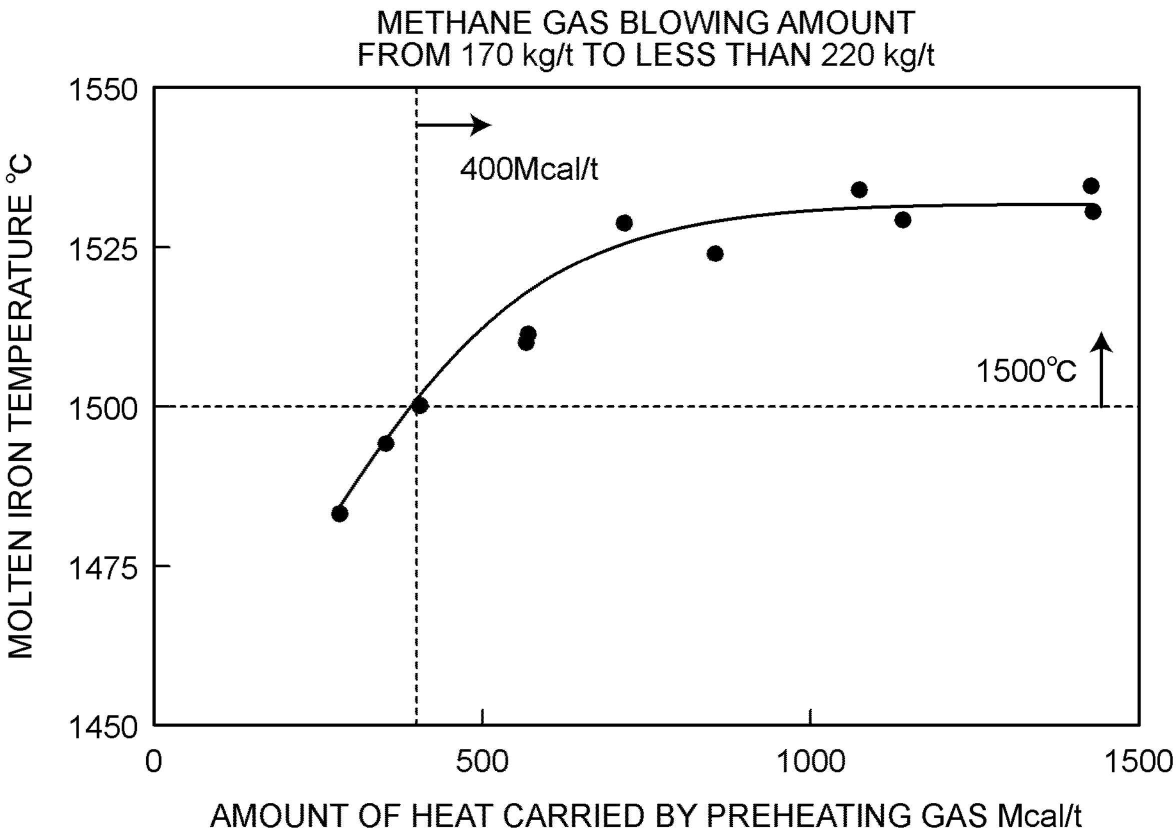
METHANE GAS BLOWING AMOUNT
FROM 170 kg/t TO LESS THAN 220 kg/t
MOLTEN IRON TEMPERATURE °C
1550
1525
1500
1475
1450
400Mcal/t
1500°C
0
500
1000
1500
AMOUNT OF HEAT CARRIED BY PREHEATING GAS Mcal/t

FIG.6

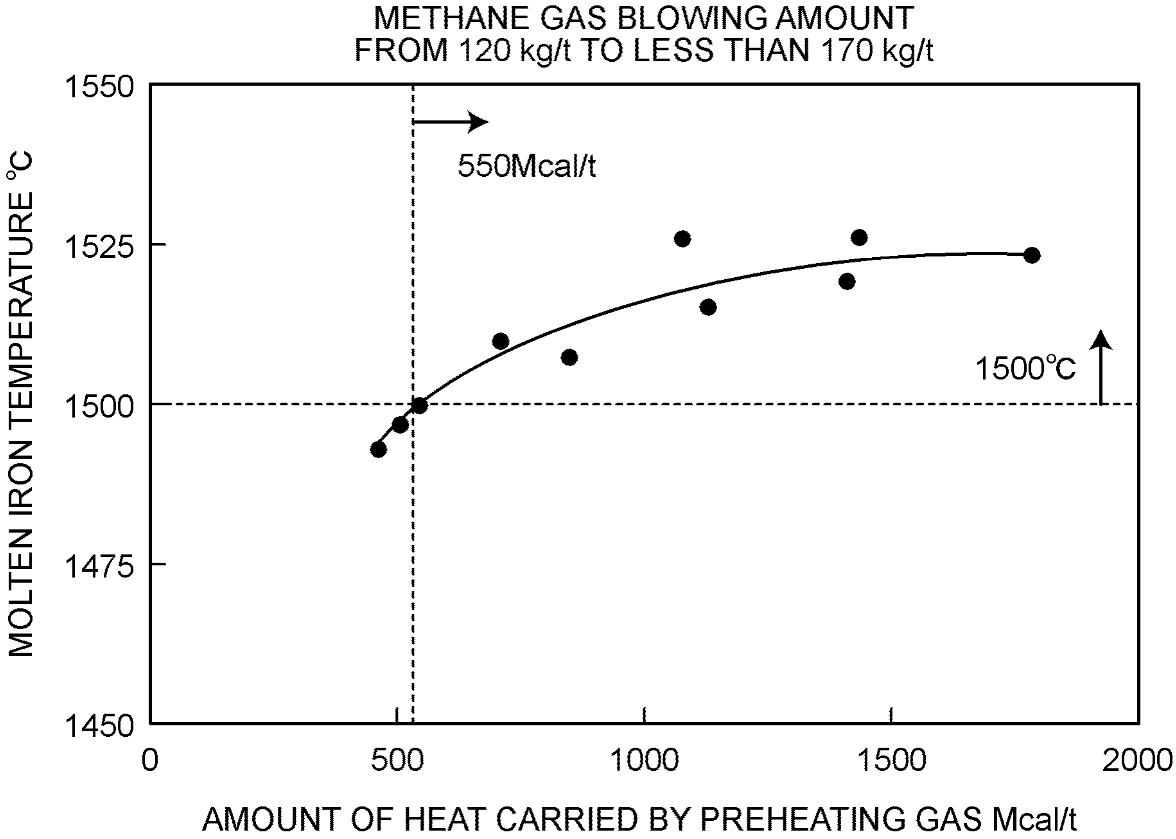
METHANE GAS BLOWING AMOUNT
FROM 120 kg/t TO LESS THAN 170 kg/t
1550
1525
1500
1475
1450
MOLTEN IRON TEMPERATURE °C
550Mcal/t
1500°C
0
500
1000
1500
2000
AMOUNT OF HEAT CARRIED BY PREHEATING GAS Mcal/t

FIG.7

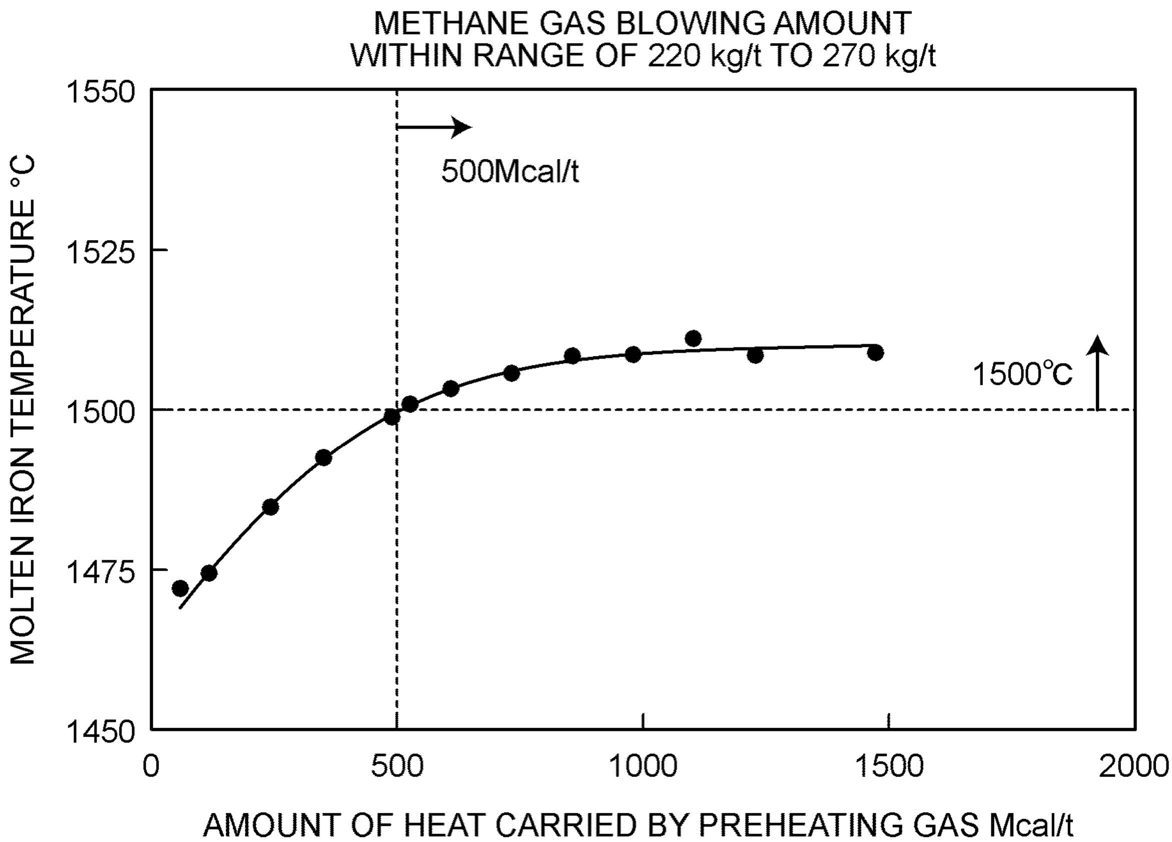
METHANE GAS BLOWING AMOUNT
WITHIN RANGE OF 220 kg/t TO 270 kg/t
500Mcal/t
1500℃
MOLTEN IRON TEMPERATURE °C
1550
1525
1500
1475
1450
0
500
1000
1500
2000
AMOUNT OF HEAT CARRIED BY PREHEATING GAS Mcal/t

FIG.8

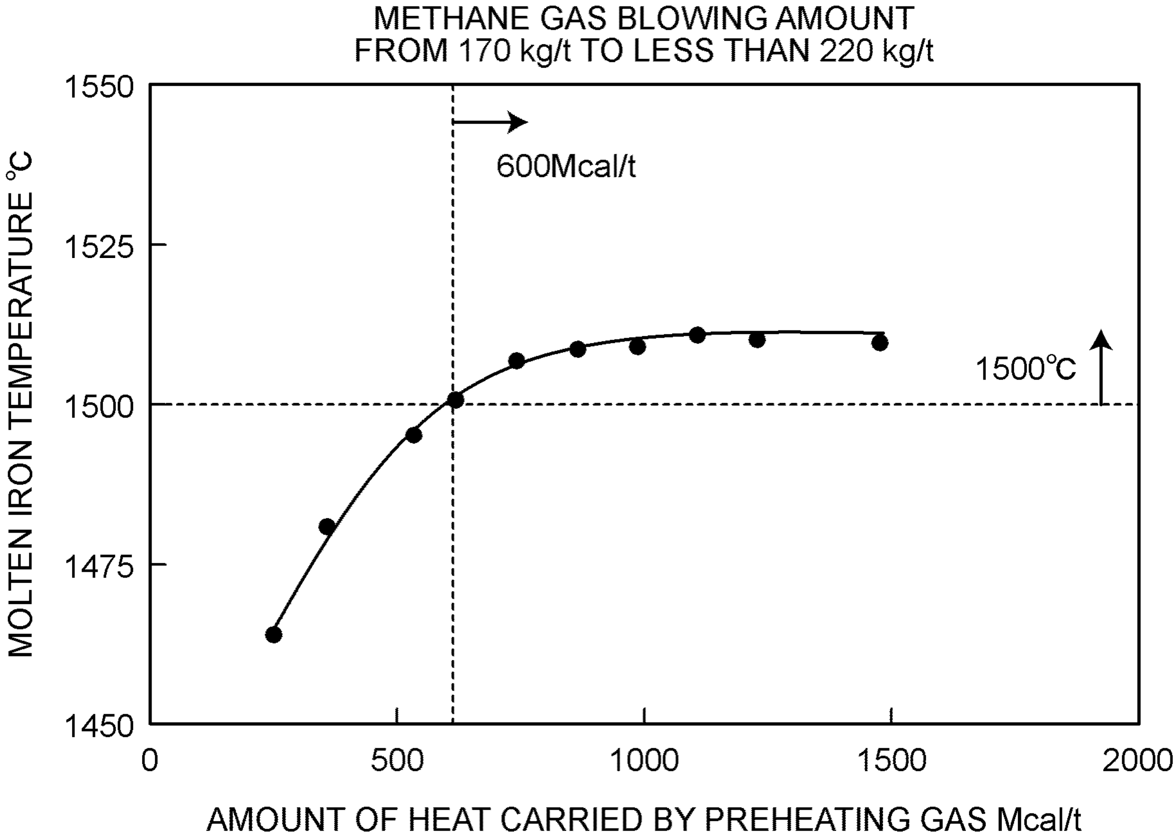
METHANE GAS BLOWING AMOUNT
FROM 170 kg/t TO LESS THAN 220 kg/t
600Mcal/t
1500℃
MOLTEN IRON TEMPERATURE °C
1550
1525
1500
1475
1450
0
500
1000
1500
2000
AMOUNT OF HEAT CARRIED BY PREHEATING GAS Mcal/t

FIG.9

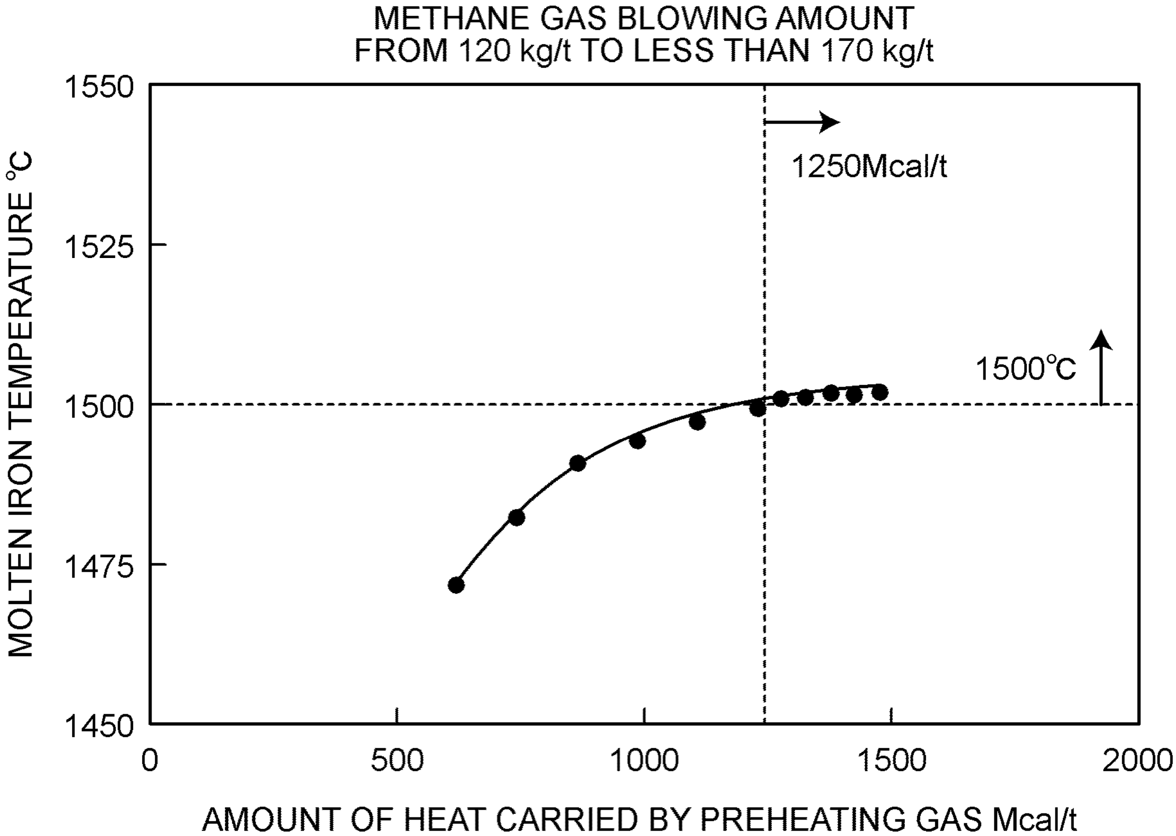
METHANE GAS BLOWING AMOUNT
FROM 120 kg/t TO LESS THAN 170 kg/t
1550
1525
1500
1475
1450
MOLTEN IRON TEMPERATURE °C
1250Mcal/t
1500°C
0
500
1000
1500
2000
AMOUNT OF HEAT CARRIED BY PREHEATING GAS Mcal/t

FIG.10

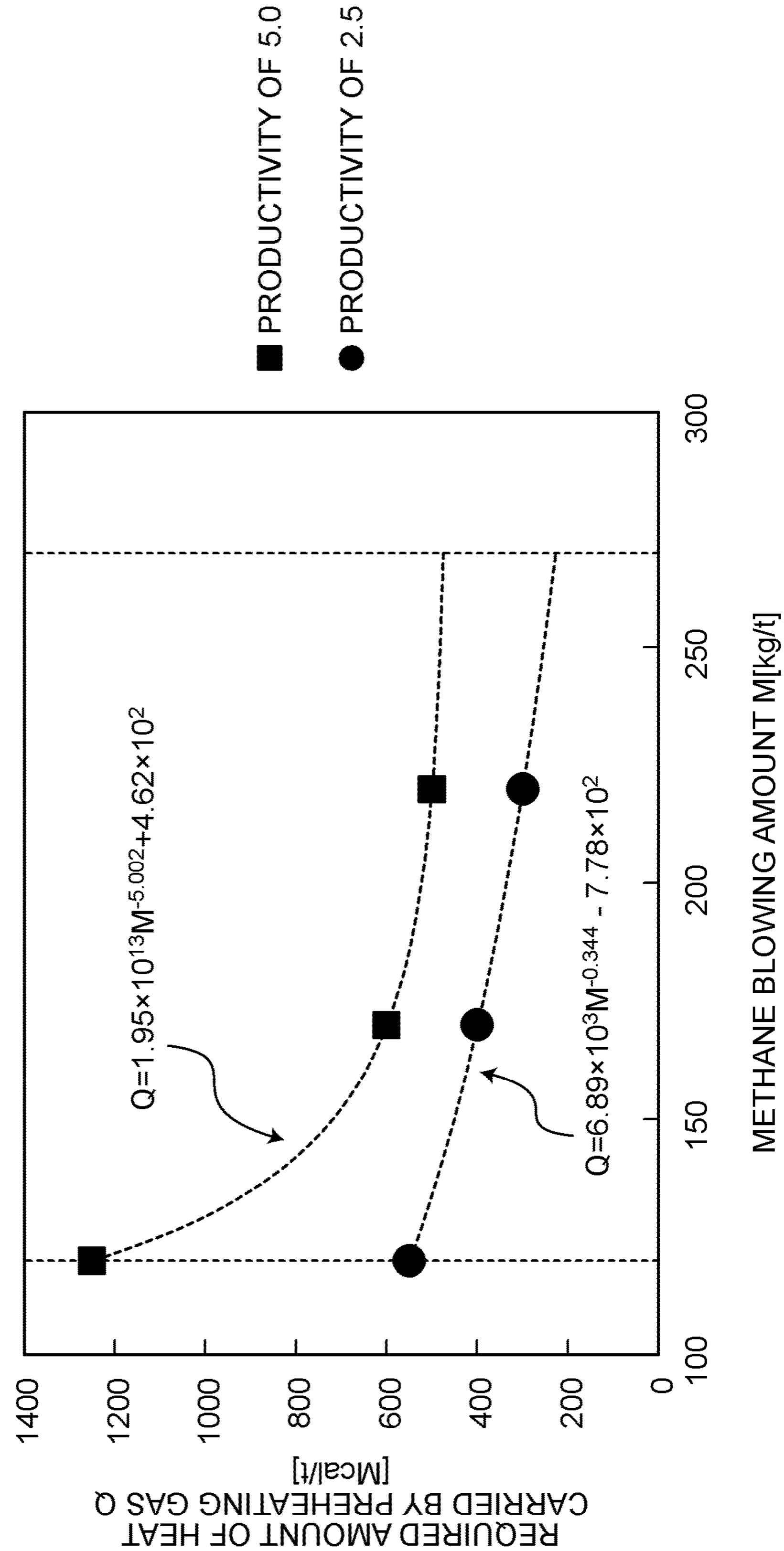
■ PRODUCTIVITY OF 5.0
● PRODUCTIVITY OF 2.5
$Q=1.95\times10^{13}M^{-5.002}+4.62\times10^{2}$
$Q=6.89\times10^{3}M^{-0.344}-7.78\times10^{2}$
REQUIRED AMOUNT OF HEAT CARRIED BY PREHEATING GAS Q [Mcal/t]
METHANE BLOWING AMOUNT M[kg/t]
0
200
400
600
800
1000
1200
1400
100
150
200
250
300

## INTERNATIONAL SEARCH REPORT

International application No.
**PCT/JP2024/004994**

**A. CLASSIFICATION OF SUBJECT MATTER**

***C21B 5/00***(2006.01)i; ***C21B 7/00***(2006.01)i
FI: C21B5/00 316; C21B5/00 321; C21B7/00 312

According to International Patent Classification (IPC) or to both national classification and IPC

**B. FIELDS SEARCHED**

Minimum documentation searched (classification system followed by classification symbols)

C21B5/00; C21B7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/131866 A1 (JFE STEEL CORPORATION) 01 July 2021 (2021-07-01) paragraphs [0001]-[0055], fig. 1-2 | 1-6, 8-14 |
| Y | | 7 |
| Y | JP 2001-123208 A (KAWASAKI STEEL CORP.) 08 May 2001 (2001-05-08) paragraphs [0001]-[0005] | 7 |
| Y | JP 2014-132122 A (NIPPON STEEL & SUMIKIN ENGINEERING CO., LTD.) 17 July 2014 (2014-07-17) paragraphs [0001]-[0090] | 7 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/004994**

| Patent document cited in search report | Publication date (day/month/year) | Patent family member(s) | Publication date (day/month/year) |
|---|---|---|---|
| WO 2021/131866 A1 | 01 July 2021 | US 2023/0034442 A1<br>paragraphs [0001]-[0140], fig. 1-2<br>EP 4083234 A1<br>KR 10-2022-0092597 A<br>CN 114829632 A<br>CA 3158066 A1 | |
| JP 2001-123208 A | 08 May 2001 | (Family: none) | |
| JP 2014-132122 A | 17 July 2014 | US 2015/0275321 A1<br>paragraphs [0001]-[0092]<br>WO 2014/088031 A1<br>EP 2930249 A1<br>CN 104781426 A<br>CN 107083461 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011225969 A
- JP 2014005510 A
- WO 2021106578 A
- JP S63169310 A


### Non-patent literature cited in the description


- **SATO et al.** *Kawasaki Steel Technical Report*, 1997, vol. 29, 30-36